(19) **Europäisches Patentamt / European Patent Office / Office européen des brevets**

(11) **EP 4 322 250 A1**

(12) **EUROPEAN PATENT APPLICATION**
published in accordance with Art. 153(4) EPC

(43) Date of publication:
**14.02.2024 Bulletin 2024/07**

(21) Application number: **22911851.8**

(22) Date of filing: **20.12.2022**

(51) International Patent Classification (IPC):
$H01M\ 4/1395^{(2010.01)}$   $H01M\ 4/1391^{(2010.01)}$
$H01M\ 4/62^{(2006.01)}$   $H01M\ 4/04^{(2006.01)}$
$H01M\ 10/052^{(2010.01)}$   $H01M\ 4/02^{(2006.01)}$

(52) Cooperative Patent Classification (CPC):
H01M 4/02; H01M 4/04; H01M 4/1391;
H01M 4/1395; H01M 4/62; H01M 10/052;
Y02E 60/10

(86) International application number:
**PCT/KR2022/020830**

(87) International publication number:
**WO 2023/121218 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.12.2021 KR 20210185204**

(71) Applicant: **LG Energy Solution, Ltd.**
**Seoul 07335 (KR)**

(72) Inventors:
• **LEE, Ilha**
  **Daejeon 34122 (KR)**

• **JOO, Mun Kyu**
  **Daejeon 34122 (KR)**
• **KIM, Sarah**
  **Daejeon 34122 (KR)**
• **JEON, Seoyoung**
  **Daejeon 34122 (KR)**
• **KWON, Yohan**
  **Daejeon 34122 (KR)**
• **CHAE, Jonghyun**
  **Daejeon 34122 (KR)**

(74) Representative: **Hoffmann Eitle**
**Patent- und Rechtsanwälte PartmbB**
**Arabellastraße 30**
**81925 München (DE)**

(54) **PRE-LITHIATION METHOD FOR NEGATIVE ELECTRODE FOR LITHIUM SECONDARY BATTERY, NEGATIVE ELECTRODE FOR LITHIUM SECONDARY BATTERY, AND LITHIUM SECONDARY BATTERY COMPRISING NEGATIVE ELECTRODE**

(57) The present application relates to a pre-lithiation method of a negative electrode for a lithium secondary battery, a negative electrode for a lithium secondary battery, and a lithium secondary battery including the negative electrode.

[Figure 1]

**Description**

[Technical Field]

The present application claims priority to and the benefit of Korean Patent Application No. 10-2021-0185204 filed with the Korean Intellectual Property Office on December 22, 2021, the entire contents of which are incorporated herein by reference.

The present application relates to a pre-lithiation method of a negative electrode for a lithium secondary battery, a negative electrode for a lithium secondary battery, and a lithium secondary battery including the negative electrode.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the increase of the technological development and demand for mobile devices, the demand for secondary batteries is also sharply increasing as an energy source. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte solution, and a separator. The negative electrode includes a negative electrode active material for intercalating and deintercalating lithium ions to and from the positive electrode, and silicon-based particles having a high discharge capacity may be used as the negative electrode active material.

In general, a carbon material such as graphite is used for a negative electrode of a lithium secondary battery, but the theoretical capacity density of carbon is 372 mAh/g (833 mAh/cm$^3$). Therefore, in order to improve the energy density of the negative electrode, silicon (Si), tin (Sn), and oxides and alloys thereof, which are alloyed with lithium, are considered as negative electrode materials. Among them, silicon-based materials have attracted attention due to their low cost and high capacity (4200 mAh/g).

However, the silicon has a problem in that volume change (shrinkage or expansion) occurs during the intercalation/deintercalation of lithium ions, resulting in deterioration of mechanical stability, and as a result, cycle characteristics are impaired. Therefore, it is necessary to develop a material having structural stability, which is excellent in stability when used as an active material of an electrochemical device, and capable of ensuring cycle characteristics.

In addition, in the case of using a silicon-based negative electrode active material, a problem arises in that the initial irreversible capacity is large. In the charging and discharging reactions of the lithium secondary battery, lithium discharged from the positive electrode is intercalated into the negative electrode during charging, and is deintercalated from the negative electrode to return to the positive electrode again during discharging. In the case of the silicon-based negative electrode active material, the volume change and the surface side reaction are severe, so that a large amount of lithium intercalated in the negative electrode during initial charging does not return to the positive electrode again, and thus an initial irreversible capacity increases. When the initial irreversible capacity increases, there occurs a problem that the battery capacity and the cycle are rapidly reduced.

In order to solve the above problem, known is a pre-lithiation method of a silicon negative electrode including a silicon-based negative electrode active material. As the pre-lithiation method, known methods include a method of manufacturing an electrode after lithiation by a physicochemical method such as electrolytic plating, lithium metal transfer, and lithium metal deposition, a method of electrochemically pre-lithiating a negative electrode, and the like.

However, the physicochemical method of the related art involves a possibility of danger, such as fire and explosion, due to environmental factors that the method should be performed at high temperatures. In addition, the electrochemical method of the related art cannot uniformly control the initial irreversible capacity and increases production cost.

In particular, in the lithium metal transfer process, it is difficult to transfer lithium metal safely and easily, and even if lithium metal is transferred, the highly reactive lithium metal immediately starts reacting with the negative electrode active material, thereby causing problems such as particle breakage on the surface of the negative electrode active material layer.

Therefore, in pre-lithiating the negative electrode, it is necessary to research a process and a material that can uniformly pre-lithiate lithium in a negative electrode active material layer in a more safe and efficient manner.

CITATION LIST

(Patent Literature 1) Japanese Patent Application Publication No. 2009-080971

[Detailed Description of the Invention]

[Technical Problem]

As a result of research on the above problems, it is found that in the pre-lithiation of a transfer process, when a layer including a specific metal is additionally laminated on top of the negative electrode active material layer, a speed of pre-lithiation can be controlled, and side reactions on a surface of a negative electrode can be prevented.

Accordingly, the present application relates to a pre-lithiation method of a negative electrode for a lithium secondary battery, a negative electrode for a lithium secondary battery, and a lithium secondary battery including the negative electrode.

[Technical Solution]

An exemplary embodiment of the present specification provides a pre-lithiation method of a negative electrode for a lithium secondary battery, the pre-lithiation method including the steps of forming a negative electrode current collector layer and a negative electrode active material layer on one surface or both surfaces of the negative electrode current collector layer; forming a silver (Ag)-including metal layer on a surface opposite to a surface of the negative electrode active material layer in contact with the negative electrode current collector layer; and transferring lithium metal to a surface opposite to a surface of the metal layer in contact with the negative electrode active material layer, in which a thickness of the metal layer is 10 nm or greater and 2 um or less.

Another exemplary embodiment provides a negative electrode for a lithium secondary battery including a negative electrode current collector layer; a negative electrode active material layer including a negative electrode active material layer composition formed on one surface or both surfaces of the negative electrode current collector layer; and a silver (Ag)-including metal layer provided on a surface opposite to a surface of the negative electrode active material layer in contact with the negative electrode current collector layer, in which a thickness of the metal layer is 10 nm or greater and 2 um or less.

Still another exemplary embodiment provides a lithium secondary battery including a positive electrode; a negative electrode for a lithium secondary battery pre-lithiated according to the pre-lithiation method of a negative electrode for a lithium secondary battery according to present application; a separator provided between the positive electrode and the negative electrode; and an electrolyte solution.

[Advantageous Effects]

In the pre-lithiation method of a negative electrode for a lithium secondary battery according to the exemplary embodiment of the present invention, the silver (Ag)-including metal layer having a thickness of 10 nm or greater and 2 um or less is formed on top of the negative electrode active material layer, so that, in particular, in the transfer process during the pre-lithiation process, the lithium metal can be easily transferred above the negative electrode active material layer.

Specifically, as the metal layer having the thickness range described above is included, the transfer of lithium metal from a laminated body for transfer can be facilitated, and the lithium metal transferred above the negative electrode active material layer is prevented from being in direct contact with the negative electrode active material. As a result, particle breakage on a surface of the negative electrode active material layer due to rapid pre-lithiation is prevented, and lithium can be more easily and uniformly pre-lithiated into the negative electrode active material layer.

Therefore, the negative electrode for a lithium secondary battery manufactured according to the pre-lithiation method of a negative electrode for a lithium secondary battery as described above includes the silver-including metal layer on top of the negative electrode active material layer, so that lithium can be more uniformly distributed in the negative electrode active material layer, specifically, lithium metal can be uniformly distributed up to a range of 30% of an inner with respect to the surface of the negative electrode active material layer.

[Brief Description of Drawings]

FIG. 1 shows a pre-lithiation method of a negative electrode for a lithium secondary battery according to an exemplary embodiment of the present application.

FIG. 2 shows a laminated structure of a lithium secondary battery according to an exemplary embodiment of the present application.

FIG. 3 is a view showing a SEM cross-sectional shape of a surface portion of a negative electrode according to Comparative Example 1.

FIG. 4 is a view showing a SEM cross-sectional shape of a surface portion of a negative electrode according to Example 1.

FIG. 5 is a view showing a surface portion of a negative electrode during lithium metal transfer of a negative electrode according to Comparative Example 1.

FIG. 6 is a view showing a surface portion of a negative electrode during lithium metal transfer of a negative electrode according to Example 1.

FIG. 7 is a view showing a surface portion of a negative electrode during lithium metal transfer of a negative electrode according to Comparative Example 4.

FIG. 8 is a view showing a surface portion of a negative electrode during lithium metal transfer of a negative electrode according to Comparative Example 5.

<Explanation of Reference Numerals and Symbols>

| | |
|---|---|
| 10: | base layer |
| 20: | lithium metal |
| 30: | negative electrode active material layer |
| 35: | silver-including metal layer |
| 40: | negative electrode current collector layer |
| 50: | separator |
| 60: | positive electrode current collector layer |
| 70: | positive electrode active material layer |
| 100: | laminated body for transfer |
| 200: | negative electrode for lithium secondary battery |
| 300: | positive electrode for lithium secondary Battery |

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In this specification, the "specific surface area" is measured by the BET method, and specifically, is calculated from a nitrogen gas adsorption amount under liquid nitrogen temperature (77K) by using BELSORP-mino II of BEL Japan. That is, in the present application, the BET specific surface area may mean the specific surface area measured by the above measurement method.

In the present specification, "Dn" means a particle size distribution, and means a particle diameter at the n% point in the cumulative distribution of the number of particles according to the particle diameter. That is, D50 is a particle diameter (average particle diameter) at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Meanwhile, the particle size distribution may be measured using a laser diffraction method. Specifically, powders to be measured are dispersed in a dispersion medium, which is then introduced into a commercially available laser diffraction particle size measurement apparatus (for example, Microtrac S3500) in which a difference in diffraction patterns according to the particle size is measured, when a laser beam passes through particles, and then a particle size distribution is calculated.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, a molecular weight means a weight-average molecular weight unless particularly described otherwise.

Hereinafter, exemplary embodiments of the present invention will be described in detail with reference to the drawings so that one skilled in the art can readily implement the present invention. However, the present invention may be embodied in various different forms, and is not limited to the following descriptions.

An exemplary embodiment of the present specification provides a pre-lithiation method of a negative electrode for a lithium secondary battery, the pre-lithiation method including the steps of forming a negative electrode current collector layer and a negative electrode active material layer on one surface or both surfaces of the negative electrode current collector layer; forming a silver (Ag)-including metal layer on a surface opposite to a surface of the negative electrode active material layer in contact with the negative electrode current collector layer; and transferring lithium metal to a surface opposite to a surface of the metal layer in contact with the negative electrode active material layer, in which a thickness of the metal layer is 10 nm or greater and 2 um or less.

In the pre-lithiation method of a negative electrode for a lithium secondary battery according to the exemplary embodiment of the present invention, the silver (Ag)-including metal layer having a thickness of 10 nm or greater and 2 um or less is formed on top of the negative electrode active material layer, so that, in particular, in the transfer process during the pre-lithiation process, the lithium metal can be easily transferred above the negative electrode active material layer and the lithium metal can be uniformly distributed into the negative electrode active material layer.

Hereinafter, the pre-lithiation method of a negative electrode for a lithium secondary battery of the present application will be described in detail.

The exemplary embodiment of the present application provides a step of forming a negative electrode current collector layer and a negative electrode active material layer on one surface or both surfaces of the negative electrode current collector layer.

In the pre-lithiation method of a negative electrode for a lithium secondary battery, the step is a process of laminating a lithium secondary battery, and the step of forming a negative electrode current collector layer and a negative electrode active material layer on one surface or both surfaces of the negative electrode current collector layer includes a step of coating a negative electrode slurry including a negative electrode active material layer composition on one surface or both surfaces of the negative electrode current collector layer, and the negative electrode active material layer composition includes one or more selected from the group consisting of a silicon-based active material, a negative electrode conductive material, and a negative electrode binder.

In the exemplary embodiment of the present application, the negative electrode current collector layer generally has a thickness of 1 um to 100 um. The negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a coupling force of the negative electrode active material, and may be used in various forms such as a film, a sheet, a foil, a net, a porous body, a foamed body, or a non-woven fabric body.

In the exemplary embodiment of the present application, the negative electrode current collector layer may have a thickness of 1 um or greater and 100 um or less, and the negative electrode active material layer may have a thickness of 20 um or greater and 500 um or less.

However, the thicknesses may be variously modified depending on a type and use of the negative electrode used, and are not limited thereto.

In the exemplary embodiment of the present application, the negative electrode slurry may include a negative electrode active material layer composition, and a slurry solvent.

In the exemplary embodiment of the present application, a solid content of the negative electrode slurry may satisfy a range of 5% or more and 40% or less. In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may mean a content of the negative electrode active material layer composition included in the negative electrode slurry, and may mean a content of the negative electrode active material composition on the basis of 100 parts by weight of the negative electrode slurry.

When the solid content of the negative electrode slurry satisfies the above range, the viscosity is appropriate during formation of the negative electrode active material layer, so that particle aggregation of the negative electrode active material layer composition is minimized to efficiently form the negative electrode active material layer.

In the exemplary embodiment of the present application, the slurry solvent is not limited thereto as long as it can dissolve and disperse the negative electrode active material layer composition, but specifically, distilled water or NMP may be used.

A negative electrode according to an exemplary embodiment of the present application may be formed by coating and drying the negative electrode slurry on the negative electrode current collector layer.

Through the drying step, the slurry solvent in the negative electrode slurry may be dried.

In the exemplary embodiment of the present application, the negative electrode active material layer composition may include one or more selected from the group consisting of a silicon-based active material, a negative electrode conductive material, and a negative electrode binder.

In the exemplary embodiment of the present application, the silicon-based active material may include one or more selected from the group consisting of SiOx (x=0), SiOx (0<x<2), SiC, and a Si alloy.

In the exemplary embodiment of the present application, the silicon-based active material may include one or more selected from the group consisting of SiOx (x=0) and SiOx (0<x≤ 2), and may include 70 parts by weight or more of SiOx (x=0), on the basis of 100 parts by weight of the silicon-based active material.

In another exemplary embodiment, on the basis of 100 parts by weight of the silicon-based active material, SiOx (x=0) may be included in amount of 70 parts by weight or more, preferably 80 parts by weight or more, and more preferably 90 parts by weight or more, and 100 parts by weight or less, preferably 99 parts by weight or less, and more preferably 95 parts by weight or less.

In the exemplary embodiment of the present application, the silicon-based active material may include a metal impurity.

The metal impurity is an impurity that may be included in silicon, and a content thereof may satisfy a range of 0.1 parts by weight or less on the basis of 100 parts by weight of a total of the silicon-based active material.

In the exemplary embodiment of the present application, the silicon-based active material may particularly use pure silicon (Si) as the silicon-based active material. The use of pure silicon (Si) as the silicon-based active material may mean that, on the basis of 100 parts by weight of the total silicon-based active material as described above, pure Si particles ($SiO_x$ (x=0)) not bonded to other particles or elements are included within the above range.

In the charging and discharging reactions of the lithium secondary battery, lithium discharged from the positive electrode is intercalated into the negative electrode during charging, and is deintercalated from the negative electrode to return to the positive electrode again during discharging. In the case of the silicon-based negative electrode active material, the volume change and the surface side reaction are severe, so that a large amount of lithium intercalated in the negative electrode during initial charging does not return to the positive electrode again, and thus an initial irreversible capacity increases. When the initial irreversible capacity increases, there occurs a problem that the battery capacity and the cycle are rapidly reduced.

In the present invention, in order to solve the above problems, the negative electrode of the lithium secondary battery is pre-lithiated to solve the initial irreversible capacity problem. Specifically, in the pre-lithiation process, during the lithium transfer process, lithium metal can be easily transferred from a laminated body for transfer and lithium in the negative electrode active material layer can be uniformly pre-lithiated.

In addition, the present invention solves the problems of the related art in such a manner that while using only the silicon-based active material as a negative electrode active material in order to improve the capacity performance, a composite of a binder of a specific condition and a conductive material bonded to the binder is used in order to address the problems of maintaining the conductive path and the combination of the conductive material, the binder, and the active material with respect to the volume expansion.

An average particle diameter (D50) of the silicon-based active material of the present invention may be 5 um to 10 um, specifically 5.5 um to 8 μm, and more specifically 6 um to 7 um. When the average particle diameter is within the above range, a specific surface area of the particles is within a suitable range, so that a viscosity of a negative electrode slurry is formed within an appropriate range. Accordingly, the particles constituting the negative electrode slurry are smoothly dispersed. In addition, when the size of the silicon-based active material has a value equal to or greater than the lower limit value, a contact area between the silicon particles and the conductive material is excellent due to the composite made of the conductive material and the binder in the negative electrode slurry, so that a continuing possibility of the conductive network increases, thereby increasing the capacity retention. In the meantime, when the average particle diameter satisfies the above range, excessively large silicon particles are excluded, so that a surface of the negative electrode is formed smooth. Accordingly, a current density non-uniformity phenomenon during charging and discharging can be prevented.

In the exemplary embodiment of the present application, the silicon-based active material generally has a characteristic BET surface area. The BET surface area of the silicon-based active material is preferably 0.01 to 150.0 $m^2/g$, more preferably 0.1 to 100.0 $m^2/g$, particularly preferably 0.2 to 80.0 $m^2/g$, and most preferably 0.2 to 18.0 $m^2/g$. The BET surface area is measured in accordance with DIN 66131 (using nitrogen).

In the exemplary embodiment of the present application, the silicon-based active material may be present, for example, in a crystalline or amorphous form, and is preferably not porous. The silicon particles are preferably spherical or splinter-shaped particles. Alternatively, but less preferably, the silicon particles may also have a fiber structure or be present in the form of a silicon-containing film or coating.

In the exemplary embodiment of the present application, the silicon-based active material may be included in an amount of 60 parts by weight or more, on the basis of 100 parts by weight of the negative electrode active material layer composition.

In another exemplary embodiment, on the basis of 100 parts by weight of the negative electrode active material layer composition, 60 parts by weight or more, preferably 65 parts by weight or more, and more preferably 70 parts by weight or more, and 95 parts by weight or less, preferably 90 parts by weight or less, and more preferably 80 parts by weight or less of the silicon-based active material may be included.

The negative electrode composition according to the present application uses the specific conductive material and binder capable of controlling the volume expansion rate during charging and discharging even when the silicon-based active material having a significantly high capacity is used within the above range. Accordingly, even when the silicon-based active material is within the above range, the negative electrode composition does not degrade the performance of the negative electrode and has excellent output characteristics in charging and discharging.

In the exemplary embodiment of the present application, the silicon-based active material may have a non-spherical shape and its sphericity is, for example, 0.9 or less, for example, 0.7 to 0.9, for example 0.8 to 0.9, and for example 0.85 to 0.9.

In the present application, the sphericity (circularity) is determined by Equation 1-1, in which A is an area and P is a boundary line.

$$[\text{Equation 1-1}]$$

$$4\pi A/P^2$$

In the related art, it is general to use only graphite-based compounds as the negative electrode active material. However, in recent years, as the demand for high-capacity batteries is increasing, attempts to mix and use silicon-based compounds are increasing in order to increase capacity. However, the silicon-based compounds have limitations in that the volume rapidly expands during the charging/discharging, resulting in damage to the conductive path formed in the negative electrode active material layer to degrade the performance of the battery. Therefore, a type of the negative electrode conductive material that is used together with the silicon-based active material is important.

In the exemplary embodiment of the present application, the negative electrode conductive material may include one or more selected from the group consisting of a point-type conductive material, a planar conductive material and a linear conductive material.

In the exemplary embodiment of the present application, the point-type conductive material refers to a conductive material that may be used for improving conductivity of the negative electrode, has conductivity without causing a chemical change and has a point or spherical shape. Specifically, the point-type conductive material may be at least one species selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In the exemplary embodiment of the present application, the point-type conductive material may have a BET specific surface area of 40 $m^2/g$ or greater and 70 $m^2/g$ or less, preferably 45 $m^2/g$ or greater and 65 $m^2/g$ or less, and more preferably 50 $m^2/g$ or greater and 60 $m^2/g$ or less.

In the exemplary embodiment of the present application, a particle diameter of the point-type conductive material may be 10 nm to 100 nm, preferably 20 nm to 90 nm, and more preferably 40 nm to 60 nm.

In the exemplary embodiment of the present application, the negative electrode conductive material may include a planar conductive material.

The planar conductive material can serve to improve conductivity by increasing surface contact among silicon particles in the negative electrode, and at the same time, to suppress the disconnection of the conductive path due to the volume expansion, and is used as a concept including as a bulk-type conductive material or a plate-like conductive material.

In the exemplary embodiment of the present application, the planar conductive material may include at least one selected from the group consisting of plate-like graphite, graphene, graphene oxide, and graphite flakes, and preferably may be plate-like graphite.

In the exemplary embodiment of the present application, the average particle diameter (D50) of the planar conductive material may be 2 um to 7 um, specifically 3 um to 6 $\mu$m, and more specifically 4 um to 5 um. When the above range is satisfied, the sufficient particle size results in easy dispersion without causing an excessive increase in viscosity of the negative electrode slurry. Therefore, the dispersion effect is excellent when dispersing using the same equipment and time.

In the exemplary embodiment of the present application, there is provided a negative electrode active material layer composition in which the planar conductive material having D10 of 0.5 um or greater and 1.5 um or less, D50 of 2.5 um or greater and 3.5 um or less and D90 of 7.0 um or greater and 15.0 um or less.

In the exemplary embodiment of the present application, for the planar conductive material, a planar conductive material with a high specific surface area having a high BET specific surface area or a planar conductive material with a low specific surface area may be used.

In the exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In the exemplary embodiment of the present application, the planar conductive material may have a BET specific surface area of 5 $m^2/g$ or greater.

In another exemplary embodiment, the planar conductive material may have a BET specific surface area of 5 $m^2/g$ or greater and 500 $m^2/g$ or less, preferably 5 $m^2/g$ or greater and 300 $m^2/g$ or less, and more preferably 5 $m^2/g$ or greater and 250 $m^2/g$ or less.

In another exemplary embodiment, the planar conductive material is a planar conductive material with a high specific surface area, and the BET specific surface area may satisfy a range of 50 $m^2/g$ or greater and 500 $m^2/g$ or less, preferably 80 $m^2/g$ or greater and 300 $m^2/g$ or less, and more preferably 100 $m^2/g$ or greater and 300 $m^2/g$ or less.

In another exemplary embodiment, the planar conductive material is a planar conductive material with a low specific surface area, and the BET specific surface area may satisfy a range of 5 $m^2/g$ or greater and 40 $m^2/g$ or less, preferably 5 $m^2/g$ or greater and 30 $m^2/g$ or less, and more preferably 5 $m^2/g$ or greater and 25 $m^2/g$ or less.

Other negative electrode conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side or entangled in such an orientation that longitudinal axes of the carbon nanotube units are substantially the same. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during manufacturing of the negative electrode, and can form more smoothly a conductive network in the negative electrode to improve the conductivity of the negative electrode.

In the exemplary embodiment of the present application, the linear conductive material may be SWCNT.

In an exemplary embodiment of the present application, there is provided a negative electrode for a lithium secondary battery in which the negative electrode conductive material includes a planar conductive material and a linear conductive material.

When the point-type conductive material as described above is not used, the output characteristics of the secondary battery of the present invention can be improved by including linear and planar conductive materials as the negative electrode conductive material.

In the exemplary embodiment of the present application, the negative electrode conductive material may be included in an amount of 10 parts by weight or more and 40 parts by weight or less, on the basis of 100 parts by weight of the negative electrode active material layer composition.

In another exemplary embodiment, the negative electrode conductive material may be included in an amount of 10 parts by weight or more and 40 parts by weight or less, preferably 10 parts by weight or more and 30 parts by weight or less, and more preferably 15 parts by weight or more and 25 parts by weight or less, on the basis of 100 parts by weight of the negative electrode active material layer composition.

In the exemplary embodiment of the present application, the negative electrode conductive material may include 90 parts by weight or more and 99.9 parts by weight or less of the planar conductive material, and 0.1 parts by weight or more and 10 parts by weight or less of the linear conductive material, on the basis of 100 parts by weight of the negative electrode conductive material.

In another exemplary embodiment, the planar conductive material may be included in an amount of 90 parts by weight to 99.9 parts by weight, preferably 93 parts by weight to 99.9 parts by weight, and more preferably 95 parts by weight to 99.9 parts by weight on the basis of 100 parts by weight of the negative electrode conductive material.

In another exemplary embodiment, the linear conductive material may be included in an amount of 0.1 part by weight to 10 parts by weight, preferably 0.1 part by weight to 7 parts by weight, and more preferably 0.1 part by weight to 5 parts by weight on the basis of 100 parts by weight of the negative electrode conductive material.

In the exemplary embodiment of the present application, the negative electrode conductive material includes a linear conductive material and a planar conductive material, and a ratio of the linear conductive material to the planar conductive material may satisfy 0.01:1 to 0.1:1.

In the exemplary embodiment of the present application, the ratio of the linear conductive material to the planar conductive material may satisfy 0.1:1.

In the exemplary embodiment of the present application, as the negative electrode conductive material includes the linear conductive material and the planar conductive material and the composition and ratio described above are satisfied, respectively, the lifespan characteristics of an existing lithium secondary battery are not significantly affected, and the number of points where charging and discharging are possible increases, so that output characteristics are excellent at a high C-rate.

The negative electrode conductive material according to the present application has a completely different configuration from a positive electrode conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving a buffer at the time of roll-pressing, and is completely different from the negative electrode conductive material of the present invention in terms of configuration and role.

In addition, the negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and are completely different from the negative electrode conductive material that is applied together with the silicon-based active material as in the present invention, in terms of composition and role.

In the exemplary embodiment of the present application, the planar conductive material that is used as the negative electrode conductive material described above has a different structure and role from those of the carbon-based active material that is generally used as the negative electrode active material. Specifically, the carbon-based active material that is used as the negative electrode active material may be artificial graphite or natural graphite, and refers to a material that is processed and used into a spherical or point-type shape so as to facilitate storage and release of lithium ions.

On the other hand, the planar conductive material that is used as the negative electrode conductive material is a material having a plane or plate shape, and may be expressed as plate-like graphite. That is, the planar conductive material is a material that is included so as to maintain a conductive path in the negative electrode active material layer, and means a material for securing a conductive path in a plane shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high capacity characteristics with respect to storing and releasing lithium, and serves to store and release all lithium ions transferred from the positive electrode.

On the other hand, in the present application, the use of a carbon-based active material as an active material means that the carbon-based active material is processed into a point or spherical shape and used as a material for storing or releasing lithium.

That is, in the exemplary embodiment of the present application, artificial graphite or natural graphite, which is a carbon-based active material, has a point-like shape, and a BET specific surface area thereof may satisfy a range of 0.1 $m^2$/g or greater and 4.5 $m^2$/g or less. In addition, plate-like graphite, which is a planar conductive material, has a planar shape, and a BET specific surface area thereof may be 5 $m^2$/g or greater.

In the exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinylalcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The binder according to the exemplary embodiment of the present application serves to hold the negative electrode active material and the negative electrode conductive material in order to prevent distortion and structural deformation of the negative electrode structure in volume expansion and relaxation of the silicon-based active material.

When such roles are satisfied, all of the general negative electrode binders can be applied. Specifically, a water-based binder may be used, and more specifically, a PAM-based binder may be used.

In the exemplary embodiment of the present application, the negative electrode binder may be included in an amount of 30 parts by weight or less, preferably 25 parts by weight or less, more preferably 20 parts or less, and 5 parts by weight or more, and 10 parts by weight or more, on the basis of 100 parts by weight of the negative electrode active material layer composition.

In the exemplary embodiment of the present application, a step of forming a silver (Ag)-including metal layer on a surface opposite to a surface of the negative electrode active material layer in contact with the negative electrode current collector layer may be included.

In the pre-lithiation method of a negative electrode for a lithium secondary battery according to the present application, the above step is included, so that transfer of lithium metal from a laminated body for transfer can be facilitated later, and the lithium metal transferred above the negative electrode active material layer is prevented from being in direct contact with the negative electrode active material. As a result, particle breakage on a surface of the negative electrode active material layer due to rapid pre-lithiation is prevented, and lithium can be more easily and uniformly pre-lithiated into the negative electrode active material layer.

In particular, the silver (Ag) included in the metal layer of the present application can stabilize the silicon-based active material by forming a bond with the silicon-based active material on the surface of the negative electrode active material layer. In addition, even during pre-lithiation into the negative electrode active material layer as a result of later transfer of the lithium metal, a bond is formed due to a reaction between lithium and silver, and accordingly, the efficiency of the pre-lithiation process can be increased.

In the exemplary embodiment of the present application, a thickness of the metal layer may be 10 nm or greater and 2 um or less.

In another exemplary embodiment, the thickness of the metal layer may satisfy a range of 10 nm or greater and 2 um or less, preferably 10 nm or greater and 1 um or less, and more preferably 10 nm or greater and 800 nm or less.

The thickness of the metal layer satisfies the above range, so that, when assembling a lithium secondary battery later, resistance characteristics are excellent in a range within which a problem is not caused in lithium ion exchange between the positive electrode and the negative electrode. Additionally, the thickness range is satisfied, so that the pre-lithiation rate of lithium metal can be stably controlled, and therefore, uniform transfer into the negative electrode active material layer becomes possible.

Specifically, if the metal layer thickness exceeds the upper limit, lithium ions originating from lithium metal are not conducted later, making it difficult to carry out the pre-lithiation. If the metal layer thickness is less than the lower limit, it is difficult to cover an entire area of the negative electrode.

In an exemplary embodiment of the present application, if the lithium metal is transferred without including the metal layer, a reaction between the lithium metal and the silicon-based active material on the surface of the negative electrode active material layer may occur rapidly, and the pre-lithiation process is completed within several minutes, so that the surface is not uniform and the silicon-based particles may be broken. However, the main object of the present invention is to address the above problems by including a metal layer satisfying the above thickness and composition.

In the exemplary embodiment of the present application, there is provided the pre-lithiation method of a negative electrode for a lithium secondary battery in which the step of forming a silver (Ag)-including metal layer on a surface opposite to a surface of the negative electrode active material layer in contact with the negative electrode current collector layer includes a step of depositing the silver (Ag) on the negative electrode active material layer through physical vapor deposition (PVD).

Specifically, the physical vapor deposition may mean a process of heating and evaporating a solid material in a high vacuum and solidifying the evaporated material on a substrate or material to be surface-treated to form a thin film, and specifically, may include a sputtering process (sputter), an e-beam process (e-beam) or a thermal deposition process (thermal evaporator).

After forming the silver-including metal layer through the above process, a step of performing vacuum drying at a temperature of 100°C to 150°C for 5 hours to 10 hours may be included.

Through the above processes, the silver-including metal layer may be formed on top of the negative electrode active material layer.

In the exemplary embodiment of the present application, a step of transferring lithium metal to a surface opposite to a surface of the metal layer in contact with the negative electrode active material layer may be included.

In general, the pre-lithiation process chemically or physically pre-lithiates lithium metal on the negative electrode, and may be specifically carried out by a lithium metal transfer process, lithium metal powder deposition, an electrochemical process, or a lithium metal deposition process, and the pre-lithiation process according to the present application may include a lithium metal transfer process.

The lithium metal transfer process can transfer highly reactive lithium metal to the top of the negative electrode active material layer more stably. In this case, a process for easily transferring lithium metal from a laminated body for transfer to the top of the negative electrode active material layer is required. Regarding this, according to the present application, the metal layer is formed on top of the negative electrode active material layer, so that the efficiency of the transfer process be increased.

In the exemplary embodiment of the present application, there is provided the pre-lithiation method of a negative electrode for a lithium secondary battery in which the step of transferring lithium metal to a surface opposite to a surface of the metal layer in contact with the negative electrode active material layer includes steps of preparing a laminated body for transfer including a base layer and lithium metal provided on the base layer, laminating the laminated body for transfer on the metal layer so that a surface opposite to a surface of the lithium metal in contact with the base layer comes into contact with the surface opposite to the surface of the metal layer in contact with the negative electrode active material layer, and removing the base layer.

In the exemplary embodiment of the present application, the deposition method for depositing the lithium metal on the base layer may be selected from evaporation deposition, chemical vapor deposition (CVD) and physical vapor deposition, but is not limited thereto, and various deposition methods that are used in the art may be used.

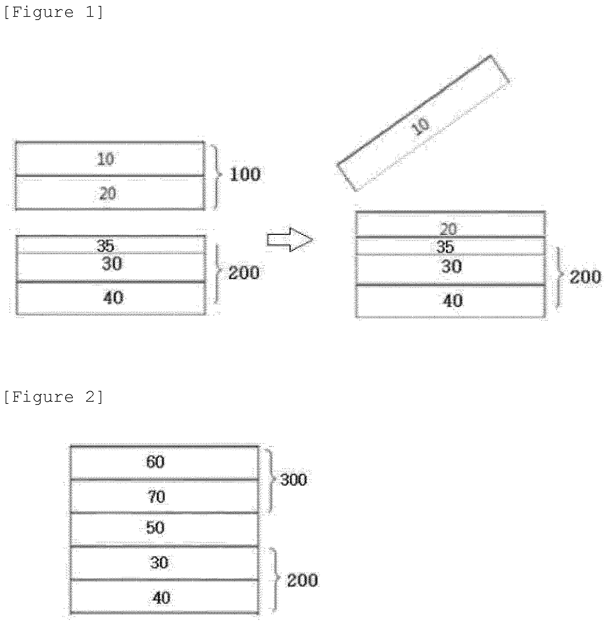

FIG. 1 shows a pre-lithiation method of a negative electrode for a lithium secondary battery according to an exemplary embodiment of the present application.

Specifically, FIG. 1 shows a process of preparing a laminated body for transfer 100 including a base layer 10 and lithium metal 20, laminating the laminated body for transfer such that the lithium metal 20 comes into contact with a metal layer 35 of a negative electrode 200 for a lithium secondary battery, in which a negative electrode active material layer 30 is formed on a negative electrode current collector layer 40 and the metal layer 35 is formed on the negative electrode active material layer 30, and then removing the base layer 10 to transfer only the lithium metal 20 on top of the metal layer 35.

At this time, the transfer process may be performed by roll pressing of applying a load of 100 kgf to 800 kgf to the negative electrode for a lithium secondary battery on which the laminated body for transfer is laminated. Thereafter, the process of removing the base layer is included. The metal layer is included according to the present application, so that during the removal, a bond between silver (Ag) and lithium can be formed, and direct contact with the silicon-based active material can be prevented, thereby enabling easy transfer of lithium metal.

The reason is described. If there is no metal layer, as in the related art, lithium metal is in direct contact with the top of the negative electrode active material layer and many by-products such as Li nitride are generated, making it difficult to transfer lithium metal into the negative electrode active material layer. Accordingly, deintercalation of lithium metal is caused. However, such problems are solved by including the metal layer satisfying the thickness and composition according to the present application.

In the exemplary embodiment of the present application, any base layer can be used without limitation as long as it can withstand process conditions such as high temperature in the step of depositing lithium metal and has a feature capable of preventing a reverse peeling problem that lithium metal is transferred onto the base layer during a winding process for transferring deposited lithium metal.

Specifically, In the exemplary embodiment of the present application, the base layer may be one or more selected from the group consisting of polyethylene terephthalate (PET), polyimide (PI), poly(methylmethacrylate)(PMMA), polypropylene, polyethylene and polycarbonate.

In the exemplary embodiment of the present application, a thickness of the base layer may be 1 um or greater and 300 um or less, and may satisfy a range of 5 um or greater and 200 um or less, and 10 um or greater and 100 um or less.

In the exemplary embodiment of the present application, a thickness of the lithium metal may be 1 um or greater and 10 um or less, and preferably may satisfy a range of 3 um or greater and 10 um or less.

When the thicknesses of the base layer and the lithium metal satisfy the above range, the transfer of the lithium metal to the negative electrode active material layer can occur efficiently and the reverse transfer can be prevented.

In the exemplary embodiment of the present application, there is provided the pre-lithiation method of a negative electrode for a lithium secondary battery in which a release layer may be further present between the base layer and lithium metal of the laminated body for transfer in order to improve the peelability of lithium metal and to secure transferability to the negative electrode active material layer.

That is, the base layer may have a release layer formed on at least one surface, or may have release layers formed on both surfaces. The release layer makes it possible to prevent a reverse peeling problem that lithium metal is transferred onto the base layer during a winding process for transferring deposited lithium metal to the negative electrode, and also makes it possible to easily separate the base layer after transferring lithium metal onto the negative electrode active material layer.

The release layer may include one or more selected from the group consisting of silicon-modified polyester in which a silicon chain is graft-linked to a polyester main chain, Si, melamine, and fluorine.

In the exemplary embodiment of the present application, the release layer may be formed by a coating method. For example, the coating method may be a method selected from the group consisting of dip coating, spray coating, spin coating, die coating, gravure coating, micro-gravure coating, comma coating, and roll coating, but is not limited thereto. That is, various coating methods that can be used to form a coating layer in the art can be used.

In the exemplary embodiment of the present application, a pre-lithiation process may proceed from the step of depositing and transferring the lithium metal on the metal layer, which may be referred to as a pre-lithiation reaction due to the high reactivity of the lithium metal before an activation process.

In the exemplary embodiment of the present application, a step of activating the transferred lithium metal may be included.

As described above, due to the high reactivity of lithium metal, the reaction of lithium metal can proceed as soon as the lithium metal comes into contact with the top of the negative electrode active material layer having the metal layer formed thereon. This is a reaction before an activation step, and thereafter, a step of removing the base layer and activating lithium to progress pre-lithiation can be defined as an activation step.

The present application provides the pre-lithiation method of a negative electrode for a lithium secondary battery including steps of transferring lithium metal to a surface opposite to a surface of the metal layer in contact with the negative electrode active material layer, and then, activating the lithium metal, in which in the step of activating the lithium metal, an activation reaction occurs within 30 minutes to 3 hours under conditions of 25°C and 1 atm.

The activation step is a step of setting a condition for diffusing lithium metal into the negative electrode active material layer, and whether the pre-lithiation is completed can be determined depending on whether lithium on top of the metal layer has completely disappeared.

In the exemplary embodiment of the present application, the activation reaction time may be 30 minutes to 3 hours, and preferably 1 hour to 2 hours. That is, unlike the related art, the reaction time between the lithium metal and the negative electrode active material layer can be increased by applying the metal layer according to the present application, and accordingly, lithium can be uniformly transferred throughout the negative electrode active material layer.

An exemplary embodiment of the present application provides a negative electrode for a lithium secondary battery including a negative electrode current collector layer; a negative electrode active material layer including a negative electrode active material layer composition formed on one surface or both surfaces of the negative electrode current collector layer; and a silver (Ag)-including metal layer provided on a surface opposite to a surface of the negative electrode active material layer in contact with the negative electrode current collector layer, in which a thickness of the metal layer is 10 nm or greater and 2 um or less.

A configuration included in the negative electrode for a lithium secondary battery is the same as described above.

In the exemplary embodiment of the present application, the negative electrode for a lithium secondary battery may be pre-lithiated through the above-described pre-lithiation process, and the negative electrode for which pre-lithiation has been completed may be referred to as a pre-lithiated negative electrode for a lithium secondary battery.

An exemplary embodiment of the present application provides a lithium secondary battery including a positive electrode; a negative electrode for a lithium secondary battery pre-lithiated according to the pre-lithiation method of a negative electrode for a lithium secondary battery according to present application; a separator provided between the positive electrode and the negative electrode; and an electrolyte solution.

FIG. 2 shows a laminated structure of a lithium secondary battery according to an exemplary embodiment of the present application. Specifically, a negative electrode 200 for a lithium secondary battery including the negative electrode active material layer 30 on one surface of the negative electrode current collector layer 40 can be seen, a positive electrode 300 for a lithium secondary battery including a positive electrode active material layer 70 on one surface of a positive electrode current collector layer 60 can be seen, and the negative electrode 200 for a lithium secondary battery and the positive electrode 300 for a lithium secondary battery are formed in a laminated structure with a separator 50 interposed therebetween.

The negative electrode for a lithium secondary battery according to the present application has such a feature that, as described above, the pre-lithiation has been progressed with a silver-including metal layer on top of the negative electrode active material layer.

In this case, the pre-lithiated negative electrode can be compared through a SEM picture, and specifically, a degree of particle breakage in the SEM picture can be expressed as a ratio through an image analysis.

For image analysis, particles on the surface portion of the negative electrode are selected using the ImageJ program, and an area after pre-lithiation can be calculated based on 100 of a portion of the existing particles on the surface portion of the negative electrode before pre-lithiation.

In the exemplary embodiment of the present application, the image analysis of the negative electrode according to the present application may satisfy Equation 1 below.

[Equation 1]

$$90 \leq (A/B) \times 100 (\%) \leq 100$$

in Equation 1,

A means an ImageJ area ratio of the surface of the negative electrode active material layer after pre-lithiation of the negative electrode including the metal layer, and

B means an ImageJ area ratio of the surface of the negative electrode active material layer before pre-lithiation of the negative electrode including the metal layer.

In the exemplary embodiment of the present application, the silver-including metal layer provided above the negative electrode current collector layer may be dissolved in an electrolyte and removed after pre-lithiation, or may remain on the negative electrode. However, even if the metal layer remains on the negative electrode, the metal layer satisfies the thickness range according to the present application and does not cause problems such as an electrode resistance.

The secondary battery according to the exemplary embodiment of the present invention may particularly include the negative electrode for a lithium secondary battery described above. Specifically, the secondary battery may include a negative electrode, a positive electrode, a separator interposed between the positive electrode and the negative electrode, and an electrolyte, and the negative electrode is the same as the negative electrode described above. Since the negative electrode has been described above, a detailed description thereof is omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 3 to 500 um, and a surface of the current collector may be formed with microscopic irregularities to enhance adhesive force of the positive electrode active material. For example, the positive electrode current collector layer may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; Ni-site type lithium nickel oxide represented by chemical formula $LiNi_{1-c2}Mc_2O_2$ (where M is at least one selected from the group consisting of Co, Mn, Al, Cu, Fe, Mg, B, and Ga, and satisfies $0.01 \leq c2 \leq 0.6$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.6$) or $Li_2Mn_3MO_8$ (where M is at least one selected from the group consisting of Fe, Co, Ni, Cu and Zn.); $LiMn_2O_4$ in which a part of Li of the chemical formula is substituted with an alkaline earth metal ion, or the like, but is not limited thereto. The positive electrode may be Li metal.

In the exemplary embodiment of the present application, the positive electrode active material includes a lithium composite transition metal compound including nickel (Ni), cobalt (Co), and manganese (Mn), the lithium composite transition metal compound includes single particles or secondary particles, and an average particle diameter (D50) of the single particles may be 1 um or greater.

For example, the average particle diameter (D50) of the single particles may be 1 um or greater and 12 um or less, 1 um or greater and 8 um or less, 1 um or greater and 6 um or less, greater than 1 $\mu$m and 12 $\mu$m or less, greater than 1 $\mu$m and 8 $\mu$m or less, or greater than 1 $\mu$m and 6 $\mu$m or less.

Even when the single particles are formed with a small average particle diameter (D50) of 1 $\mu$m or greater and 12 $\mu$m or less, the particle strength may be excellent. For example, the single particle may have a particle strength of 100 to 300 Mpa when roll-pressing with a force of 650 kgf/cm$^2$. Accordingly, even when the single particles are roll-pressed with a strong force of 650 kgf/cm$^2$, the increase phenomenon of micro-particles in an electrode due to particle breakage is alleviated, thereby improving the lifetime characteristic of the battery.

The single particles may be manufactured by mixing and firing a transition metal precursor and a lithium source material. The secondary particles may be manufactured by a method different from that of the single particles, and the composition thereof may be the same as or different from that of the single particles.

The method of forming the single particles is not particularly limited, but generally can be formed by over-firing with raised firing temperature, or may be manufactured by using additives such as grain growth promoters that help over-firing, or by changing a starting material.

For example, the firing is performed at a temperature at which single particles can be formed. To this end, the firing should be performed at a temperature higher than that of the secondary particles. For example, when the composition of the precursor is the same, the firing should be performed at a temperature higher than that of the secondary particles by about 30°C to 100°C. The firing temperature for forming the single particles may vary depending on the metal composition in the precursor. For example, when forming single particles with a high-Ni NCM-based lithium composite transition metal oxide having a nickel (Ni) content of 80 mol% or more, the firing temperature may be about 700°C to 1000°C, and preferably about 800°C to 950°C. When the firing temperature satisfies the above range, a positive electrode active material including single particles having excellent electrochemical properties can be manufactured. If the firing temperature is below 790°C, a positive electrode active material containing a lithium complex transition metal compound in the form of secondary particles may be manufactured, and if the firing temperature exceeds 950°C, excessive firing occurs and a layered crystal structure is not properly formed, so that the electrochemical properties may be deteriorated.

In the present specification, the single particle is a term used to distinguish the same from typical secondary particles resulting from aggregation of tens to hundreds of primary particles, and is a concept including a single particle consisting of one primary particle and a quasi-single particle form that is an aggregate of 30 or less primary particles.

Specifically, in the present invention, the single particle may be a single particle consisting of one primary particle or a quasi-single particle form that is an aggregate of 30 or less primary particles, and the secondary particle may be an aggregate form of hundreds of primary particles.

In the exemplary embodiment of the present application, the lithium composite transition metal compound, which is the positive electrode active material, further includes secondary particles, and the average particle diameter (D50) of the single particles is smaller than the average particle diameter (D50) of the secondary particles.

In the present invention, the single particle may be a single particle consisting of one primary particle or a quasi-single particle form that is an aggregate of 30 or less primary particles, and the secondary particle may be an aggregate form of hundreds of primary particles.

The above-described lithium composite transition metal compound may further include secondary particles. The secondary particle means a form formed by aggregation of primary particles, and can be distinguished from the concept of a single particle including one primary particle, one single particle and a quasi-single particle form, which is an aggregate of 30 or less primary particles.

The secondary particle may have a particle diameter (D50) of 1 um to 20 um, 2 um to 17 um, and preferably 3 um to 15 um. The specific surface area (BET) of the secondary particles may be 0.05 $m^2$/g to 10 $m^2$/g, preferably 0.1 $m^2$/g to 1 $m^2$/ g, and more preferably 0.3 $m^2$/g to 0.8 $m^2$/g.

In a further exemplary embodiment of the present application, the secondary particle is an aggregate of primary particles, and the average particle diameter (D50) of the primary particles is 0.5 um to 3 um. Specifically, the secondary particle may be an aggregate form of hundreds of primary particles, and the average particle diameter (D50) of the primary particles may be 0.6 um to 2.8 um, 0.8 um to 2.5 um, or 0.8 um to 1.5 um.

When the average particle diameter (D50) of the primary particles satisfies the above range, a single-particle positive electrode active material having excellent electrochemical properties can be formed. If the average particle diameter (D50) of the primary particles is too small, the number of aggregates of primary particles forming lithium nickel-based oxide particles increases, reducing the effect of suppressing particle breakage during roll-pressing, and if the average particle diameter (D50) of the primary particles is too large, a lithium diffusion path inside the primary particles may be lengthened, increasing a resistance and degrading an output characteristic.

According to a further exemplary embodiment of the present application, the average particle diameter (D50) of the single particles is smaller than the average particle diameter (D50) of the secondary particles. As a result, the single particles may have excellent particle strength even if they are formed with a small particle diameter, and accordingly, the increase phenomenon of micro-particles in an electrode due to particle breakage is alleviated, thereby improving the lifetime characteristic of the battery.

In the exemplary embodiment of the present application, the average particle diameter (D50) of the single particles is smaller than the average particle diameter (D50) of the secondary particles by 1 um to 18 um.

For example, the average particle diameter (D50) of the single particles may be 1 um to 16 um smaller, 1.5 um to 15 um smaller, or 2 um to 14 um smaller than the average particle diameter (D50) of the secondary particles.

When the average particle diameter (D50) of the single particles is smaller than the average particle diameter (D50) of the secondary particles, for example, when the above range is satisfied, the single particles may have excellent particle strength even if they are formed with a small particle diameter, and as a result, the increase phenomenon of micro-particles in an electrode due to particle breakage is alleviated, thereby improving the lifetime characteristic of the battery and the energy density.

According to a further exemplary embodiment of the present application, the single particles are included in an amount of 15 parts by weight to 100 parts by weight on the basis of 100 parts by weight of the positive electrode active material. The single particles may be included in an amount of 20 parts by weight to 100 parts by weight, or 30 parts by weight to 100 parts by weight on the basis of 100 parts by weight of the positive electrode active material.

For example, the single particles may be included in an amount of 15 parts by weight or more, 20 parts by weight or more, 25 parts by weight or more, 30 parts by weight or more, 35 parts by weight or more, 40 parts by weight or more, or 45 parts by weight or more on the basis of 100 parts by weight of the positive electrode active material. The single particles may be included in an amount of 100 parts by weight or less on the basis of 100 parts by weight of the positive electrode active material.

When the single particles are included within the above range, excellent battery characteristics may be exhibited in combination with the negative electrode material described above. In particular, when the single particles are included in an amount of 15 parts by weight or more, the increase phenomenon of micro-particles in an electrode due to particle breakage in a roll-pressing process after fabrication of an electrode can be alleviated, thereby improving the lifetime characteristics of the battery.

In the exemplary embodiment of the present application, the lithium composite transition metal compound may further include secondary particles, and the secondary particles may be included in an amount of 85 parts by weight or less on the basis of 100 parts by weight of the positive electrode active material. The secondary particles may be included in an amount of 80 parts by weight or less, 75 parts by weight or less, or 70 parts by weight or less on the basis of 100 parts by weight of the positive electrode active material. The secondary particles may be included in an amount of 0 part by weight or more on the basis of 100 parts by weight of the positive electrode active material.

When the above range is satisfied, the above-described effects due to the existence the single particles in the positive electrode active material can be maximized. In the case in which the positive electrode active material of the secondary particles is included, the components thereof may be the same as or different from those exemplified in the single-particle positive electrode active material described above, and may mean an aggregate form of single particles.

In the exemplary embodiment of the present application, the positive electrode active material in 100 parts by weight of the positive electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, most preferably 98 parts by weight or more and 99.9 parts by weight or less.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve adhesion between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte solution as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyllolactone, 1,2-dimetoxy ethane, tetrahydrofuran, 2-methyltetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte solution, in which, for example, one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving lifetime characteristics of the battery, suppressing a decrease in battery capacity, improving discharge capacity of the battery, and the like, in addition to the above-described electrolyte components.

An exemplary embodiment of the present invention provides a battery module including the secondary battery as a unit cell, and a battery pack including the same. Since the battery module and the battery pack include the secondary battery having high capacity, high rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**<Examples>**

**<Manufacturing of Laminated Body for Transfer>**

Lithium metal was deposited at a level of 6 to 7um on the top of the PET base, on which a release layer was coated, (release layer was coated on one surface of the PET available from IONE Film, with the thickness of 20 um to 50 um) by using a PVD method, so that a laminated body for transfer was manufactured.

**<Manufacturing of Negative Electrode>**

Si (average particle diameter (D50): 3.5 $\mu$m) serving as a silicon-based active material, denka black serving as a conductive material, SBR serving as a binder, and CMC serving as a thickener were added to distilled water serving as a solvent for forming a negative electrode slurry in a weight ratio of 80:15.8:3:1.2 to manufacture a negative electrode slurry (solid content concentration: 25 wt%) .

As a mixing method, the conductive material, the binder, the thickener, and water were dispersed at 2500 rpm for 30 minutes by using a homo mixer, and then the active material was added and dispersed therein at 2500 rpm for 30 minutes to manufacture a slurry.

The negative electrode slurry was coated on both surfaces of a copper current collector (thickness: 8 um) serving as a negative electrode current collector with a loading amount of 85 mg/25 cm$^2$, roll-pressed, and dried in a vacuum oven at 130°C for 10 hours to form a negative electrode active material layer (thickness: 33 pm), which was prepared as a negative electrode (thickness of negative electrode: 41 um, porosity of negative electrode: 40.0%).

Thereafter, a deposition layer including the composition of Table 1 below was deposited in the thickness range of Table 1 on top of the negative electrode active material layer by using a thermal evaporation method.

Then, in order to transfer the laminated body for transfer to the negative electrode active material layer, the lithium metal of the laminated body for transfer was placed on top of the negative electrode active material layer, which was then subjected to roll-pressing while applying a load of 200 kgf/cm. At this time, the temperature was set to 80°C, and the PET layer of the laminated body for transfer was removed immediately after lamination, and the negative electrode was subjected to pre-lithiation.

[Table 1]

|  | Metal layer type | Thickness |
|---|---|---|
| Example 1 | silver (Ag) | 100 nm |
| Example 2 | silver (Ag) | 800 nm |
| Example 3 | silver (Ag) | 500 nm |
| Comparative Example 1 | - | - |
| Comparative Example 2 | silver (Ag) | 5 nm |
| Comparative Example 3 | silver (Ag) | 2.5 um |
| Comparative Example 4 | silicon (Si) | 100 nm |
| Comparative Example 5 | silicon oxide ($SiO_x$, 0<x<2) | 100 nm |

**<Manufacturing of Lithium Secondary Battery>**

A bi-cell type battery was manufactured using the negative electrode prepared in Table 1 (pre-lithiation process was performed) and the NCM as a counter electrode. For the electrolyte solution used in this battery, 1M $LiPF_6$-dissolved ethylene carbonate (EC)/ethyl methyl carbonate (EMC) (=3/7 (volume ratio)) was used.

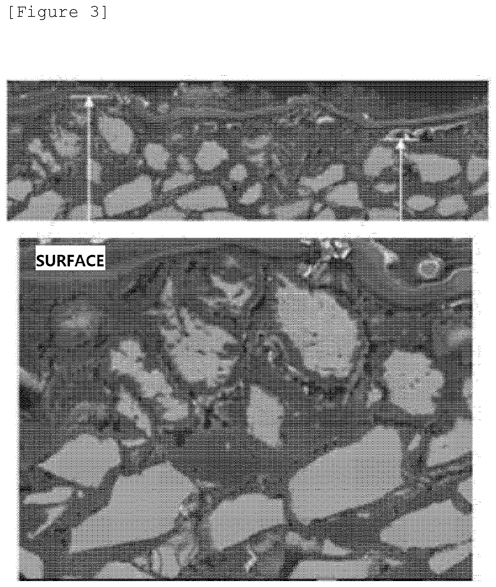

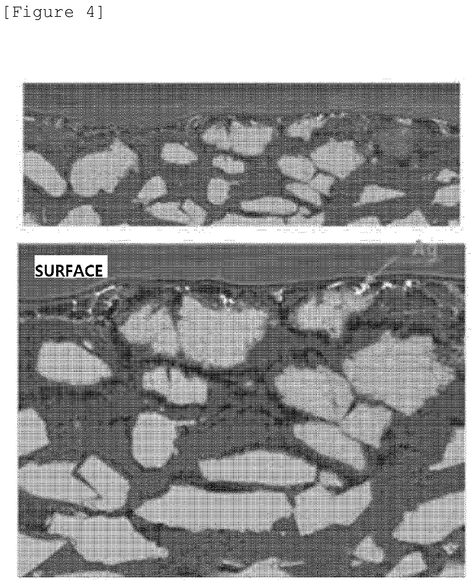

FIG. 3 is a view showing a SEM cross-sectional shape of a surface portion of a negative electrode according to Comparative Example 1, and FIG. 4 is a view showing a SEM cross-sectional shape of a surface portion of a negative electrode according to Example 1.

Specifically, as can be seen from FIGS. 3 and 4, it can be confirmed that during the pre-lithiation of lithium metal, there occurred a difference in degree of breakage of the silicon-based particles in a portion where the lithium metal and the surface of the negative electrode active material layer contact each other. FIG. 3 shows a case where a silver-including metal layer was not provided, and it can be confirmed that the degree of particle breakage of the surface portion was greater than a case where a silver-including metal layer was provided.

This is a result of reducing particle breakage of the silicon-based active material and minimizing reaction byproducts by reducing the reaction with the silicon-based active material due to the presence of the silver-including metal layer.

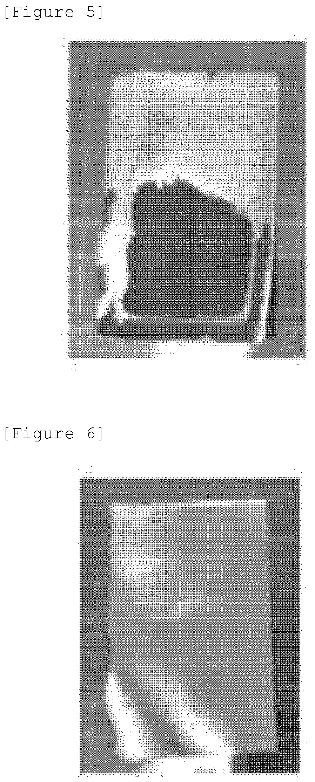

In addition, FIG. 5 is a view showing a surface portion of a negative electrode during lithium metal transfer of a negative electrode according to Comparative Example 1, and FIG. 6 is a view showing a surface portion of a negative electrode during lithium metal transfer of a negative electrode according to Example 1.

As can be seen in FIG. 5, it can be confirmed that, when a silver-including metal layer was not provided on the surface of the negative electrode active material layer, it was not easy to remove the base layer during lithium metal transfer, so it was not easy to transfer lithium metal and electrode detachment occurred. In contrast, as can be seen in FIG. 6, it can be confirmed that transfer of lithium metal also occurred easily as the negative electrode included the silver-including metal layer according to the present application.

Comparative Example 2 and Comparative Example 3 correspond to cases where a silver-including metal layer was provided on the surface portion of the negative electrode active material layer, but the thickness of the metal layer was greater than the upper limit range and less than the lower limit range. Specifically, in the case of Comparative Example 2, the thickness of the metal layer was small, so the particle breakage of the surface portion still occurred as in Comparative Example 1, and in the case of Comparative Example 3, the thickness of the metal layer was thick, so pre-lithiation did not occur easily.

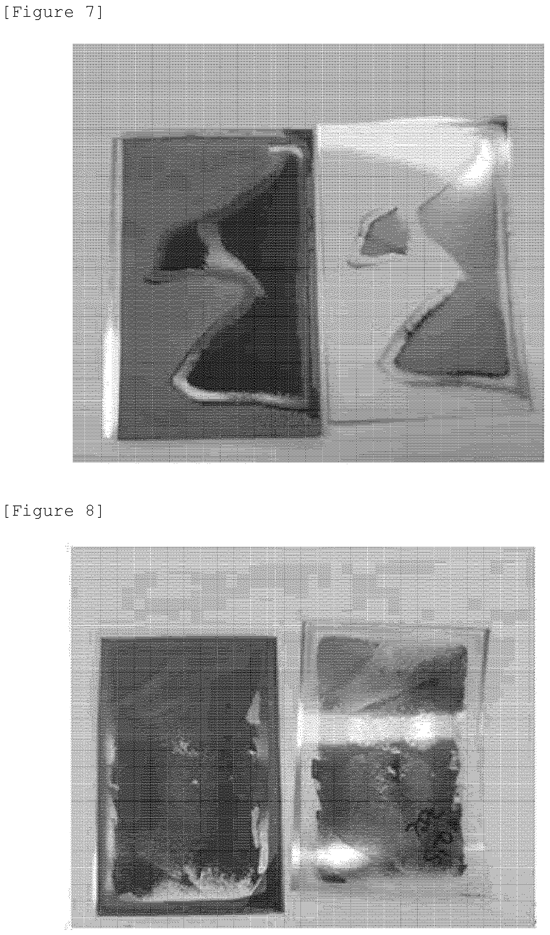

FIG. 7 is a view showing a surface portion of a negative electrode during lithium metal transfer of a negative electrode according to Comparative Example 4. FIG. 8 is a view showing a surface portion of a negative electrode during lithium metal transfer of a negative electrode according to Comparative Example 5. Comparative Example 4 and Comparative Example 5 correspond to cases where inorganic material layers other than silver (Ag) as the metal layer were included, respectively. As in Comparative Example 3, it can be confirmed that lithium metal ions did not pass smoothly, so pre-lithiation did not easily occur. In addition, during lithium metal transfer, it was not easy to remove the base layer, so it was not easy to transfer lithium metal and electrode detachment occurred.

**Claims**

1. A pre-lithiation method of a negative electrode for a lithium secondary battery, the pre-lithiation method comprising:

forming a negative electrode current collector layer and a negative electrode active material layer on one surface or both surfaces of the negative electrode current collector layer;

forming a silver (Ag)-including metal layer on a surface opposite to a surface of the negative electrode active material layer in contact with the negative electrode current collector layer; and

transferring lithium metal to a surface opposite to a surface of the metal layer in contact with the negative electrode active material layer,

wherein a thickness of the metal layer is 10 nm or greater and 2 um or less.

2. The pre-lithiation method of a negative electrode for a lithium secondary battery of claim 1, wherein the forming of the negative electrode current collector layer and the negative electrode active material layer on one surface or both surfaces of the negative electrode current collector layer comprises coating a negative electrode slurry comprising a negative electrode active material layer composition on one surface or both surfaces of the negative electrode current collector layer, and

wherein the negative electrode active material layer composition comprises one or more selected from the group consisting of a silicon-based active material, a negative electrode conductive material, and a negative electrode binder.

3. The pre-lithiation method of a negative electrode for a lithium secondary battery of claim 1, wherein the forming of the silver (Ag)-including metal layer on a surface opposite to a surface of the negative electrode active material layer in contact with the negative electrode current collector layer comprises depositing the silver (Ag) on the negative electrode active material layer by physical vapor deposition (PVD).

4. The pre-lithiation method of a negative electrode for a lithium secondary battery of claim 1, comprising: after transferring the lithium metal to a surface opposite to a surface of the metal layer in contact with the negative electrode active material layer, activating the lithium metal,

wherein in the activating of the lithium metal, an activation reaction occurs within 30 minutes to 3 hours under conditions of 25°C and 1 atm.

5. The pre-lithiation method of a negative electrode for a lithium secondary battery of claim 1, wherein the transferring of lithium metal to a surface opposite to a surface of the metal layer in contact with the negative electrode active material layer comprises:

preparing a laminated body for transfer comprising a base layer and lithium metal provided on the base layer,

laminating the laminated body for transfer on the metal layer so that a surface opposite to a surface of the lithium metal in contact with the base layer comes into contact with the surface opposite to the surface of the metal layer in contact with the negative electrode active material layer, and

removing the base layer.

6. The pre-lithiation method of a negative electrode for a lithium secondary battery of claim 5, wherein a release layer is further present between the base layer and lithium metal of the laminated body for transfer.

7. The pre-lithiation method of a negative electrode for a lithium secondary battery of claim 2, wherein the silicon-based active material comprises one or more selected from the group consisting of $SiO_x$ (x=0), $SiO_x$ (0<x<2), SiC, and a Si alloy.

8. The pre-lithiation method of a negative electrode for a lithium secondary battery of claim 2, wherein the silicon-based active material comprises one or more selected from the group consisting of $SiO_x$ (x=0) and $SiO_x$ (0<x<2), and comprises 70 parts by weight or more of the $SiO_x$ (x=0) on the basis of 100 parts by weight of the silicon-based active material.

9. The pre-lithiation method of a negative electrode for a lithium secondary battery of claim 1, wherein a thickness of the lithium metal is 1 um or greater and 10 um or less.

10. A negative electrode for a lithium secondary battery comprising:

a negative electrode current collector layer;

a negative electrode active material layer comprising a negative electrode active material layer composition formed on one surface or both surfaces of the negative electrode current collector layer; and

a silver (Ag)-including metal layer provided on a surface opposite to a surface of the negative electrode active material layer in contact with the negative electrode current collector layer,
wherein a thickness of the metal layer is 10 nm or greater and 2 um or less.

11. The negative electrode for a lithium secondary battery of claim 10, wherein a thickness of the negative electrode current collector layer is 1 um or greater and 100 um or less, and
wherein a thickness of the negative electrode active material layer is 20 um or greater and 500 um or less.

12. A lithium secondary battery comprising:

a positive electrode;
a negative electrode for a lithium secondary battery pre-lithiated according to the pre-lithiation method of a negative electrode for a lithium secondary battery according to any one of claims 1 to 9;
a separator provided between the positive electrode and the negative electrode; and
an electrolyte solution.

[Figure 1]

[Figure 2]

[Figure 3]

[Figure 4]

[Figure 5]

[Figure 6]

[Figure 7]

[Figure 8]

## INTERNATIONAL SEARCH REPORT

| International application No. |
|---|
| **PCT/KR2022/020830** |

**A. CLASSIFICATION OF SUBJECT MATTER**

**H01M 4/1395**(2010.01)i; **H01M 4/1391**(2010.01)i; **H01M 4/62**(2006.01)i; **H01M 4/04**(2006.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/1395(2010.01); H01M 10/05(2010.01); H01M 10/42(2006.01); H01M 4/13(2010.01); H01M 4/139(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극 (anode), 은 (silver, Ag), 금속층 (metal layer), 전리튬화 (prelithiation), 물리 기상 증착법 (physical vapor deposition, PVD), 이차전지 (secondary battery)

**C. DOCUMENTS CONSIDERED TO BE RELEVANT**

| Category* | Citation of document, with indication, where appropriate, of the relevant passages | Relevant to claim No. |
|---|---|---|
| A | KR 10-2021-0132425 A (LG ENERGY SOLUTION, LTD.) 04 November 2021 (2021-11-04)<br>   See abstract; paragraphs [0027] and [0058]; and claims 1, 4 and 11-12. | 1-12 |
| A | ZHOU, L. et al. A hierarchically structured Si/Cu/Ag integrated anode for efficient lithium-ion batteries. Materials Letters. 2019, vol. 244, pp. 199-202.<br>   See entire document. | 1-12 |
| A | KR 10-2005-0041661 A (SAMSUNG SDI CO., LTD.) 04 May 2005 (2005-05-04)<br>   See entire document. | 1-12 |
| A | KR 10-2009-0018775 A (SION POWER CORPORATION) 23 February 2009 (2009-02-23)<br>   See entire document. | 1-12 |
| A | KR 10-2021-0021777 A (KOREA ELECTROTECHNOLOGY RESEARCH INSTITUTE) 02 March 2021 (2021-03-02)<br>   See entire document. | 1-12 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **04 April 2023** | **04 April 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT<br>Information on patent family members | | | | International application No.<br>**PCT/KR2022/020830** | |
|---|---|---|---|---|---|

| Patent document<br>cited in search report | | | Publication date<br>(day/month/year) | Patent family member(s) | | | Publication date<br>(day/month/year) |
|---|---|---|---|---|---|---|---|
| KR | 10-2021-0132425 | A | 04 November 2021 | CN | 114846645 | A | 02 August 2022 |
| | | | | US | 2023-0039594 | A1 | 09 February 2023 |
| | | | | WO | 2021-221388 | A1 | 04 November 2021 |
| KR | 10-2005-0041661 | A | 04 May 2005 | CN | 1327548 | C | 18 July 2007 |
| | | | | CN | 1612377 | A | 04 May 2005 |
| | | | | JP | 2005-142156 | A | 02 June 2005 |
| | | | | KR | 10-0542213 | B1 | 10 January 2006 |
| | | | | US | 2005-0095504 | A1 | 05 May 2005 |
| KR | 10-2009-0018775 | A | 23 February 2009 | CN | 101438453 | A | 20 May 2009 |
| | | | | CN | 101438453 | B | 03 April 2013 |
| | | | | EP | 1999818 | A2 | 10 December 2008 |
| | | | | EP | 1999818 | B1 | 08 May 2019 |
| | | | | JP | 2003-515892 | A | 07 May 2003 |
| | | | | JP | 2003-515893 | A | 07 May 2003 |
| | | | | JP | 2004-527888 | A | 09 September 2004 |
| | | | | JP | 2009-530794 | A | 27 August 2009 |
| | | | | JP | 2013-058499 | A | 28 March 2013 |
| | | | | JP | 4347577 | B2 | 21 October 2009 |
| | | | | JP | 5106732 | B2 | 26 December 2012 |
| | | | | JP | 5112584 | B2 | 09 January 2013 |
| | | | | JP | 5629461 | B2 | 19 November 2014 |
| | | | | KR | 10-1203376 | B1 | 20 November 2012 |
| | | | | KR | 10-1506377 | B1 | 27 March 2015 |
| | | | | KR | 10-2012-0032051 | A | 04 April 2012 |
| | | | | WO | 2007-111895 | A2 | 04 October 2007 |
| | | | | WO | 2007-111895 | A3 | 06 December 2007 |
| | | | | WO | 2007-111901 | A2 | 04 October 2007 |
| | | | | WO | 2007-111901 | A3 | 29 November 2007 |
| KR | 10-2021-0021777 | A | 02 March 2021 | | None | | |

Form PCT/ISA/210 (patent family annex) (July 2022)

**REFERENCES CITED IN THE DESCRIPTION**

**Patent documents cited in the description**

- KR 1020210185204
- JP 2009080971 A